## Europäisches Patentamt

## European Patent Office

## Office européen des brevets

(19)

(11) Veröffentlichungsnummer: **0 009 794**
**A1**

(12) # EUROPÄISCHE PATENTANMELDUNG ·

(21) Anmeldenummer: **79103727.8**

(22) Anmeldetag: **01.10.79**

(51) Int. Cl.³: **C 07 C 102/00**
**C 07 C 103/375, C 07 C 103/38**
**C 07 B 11/00**

(30) Priorität: **07.10.78 DE 2843898**

(43) Veröffentlichungstag der Anmeldung:
**16.04.80 Patentblatt 80/8**

(84) Benannte Vertragsstaaten:
**CH DE FR GB IT**

(71) Anmelder: **BASF Aktiengesellschaft**
**Carl-Bosch-Strasse 38**
**D-6700 Ludwigshafen(DE)**

(72) Erfinder: **Armbrust, Herbert**
**Joh.-Sebastian-Bach-Strasse 6**
**D-6718 Gruenstadt 1(DE)**

(72) Erfinder: **Benz, Kurt**
**Wielandstrasse 6**
**D-6725 Roemerberg 3(DE)**

(72) Erfinder: **Rotermund, Gerhard W., Dr.**
**Landfriedstrasse 3**
**D-6900 Heidelberg(DE)**

(54) **Verfahren zur Herstellung von Nitroacetaniliden.**

Die Erfindung betrifft ein Verfahren zur Nitrierung von Acetaniliden mit konzentrierter Salpetersäure, das dadurch gekennzeichnet ist, daß man die Acetanilide in konzentrierter $H_2SO_4$ löst und die Lösung in einem Reaktor mit guter Wärmeabführung mit bis zu 65 %iger Salpetersäure so vereinigt, daß die Reaktortemperatur ungefähr 30°C nicht überschreitet.

Die erfindungsgemäß hergestellten Produkte sind wertvolle Ausgangsstoffe beispielsweise zur Herstellung von Farbstoffen.

EP 0 009 794 A1

BASF Aktiengesellschaft                    O.Z. 0050/033457

Verfahren zur Herstellung von Nitroacetaniliden

Die Erfindung betrifft ein Verfahren zur Herstellung von Nitroacetaniliden aus Acetaniliden durch Nitrierung mit Salpetersäure, das dadurch gekennzeichnet ist, daß man das Acetanilid in konzentrierter Schwefelsäure löst und die Lösung in einem Reaktor mit guter Wärmeabführung mit bis zu 65 %iger Salpetersäure so vereinigt, daß eine Reaktionstemperatur von ungefähr 30°C nicht überschritten wird.

Bevorzugt ist eine Salpetersäurekonzentration von 50 bis 65 %. Als konzentrierte Schwefelsäure wird zweckmäßigerweise die übliche 96 %ige Säure verwendet, in der die Acetanilide zu einer ungefähr 25 %igen Lösung aufgelöst werden.

Reaktoren mit guter Wärmeabführung sind beispielsweise Plattenwärmetauscher oder Dünnschicht- oder Fallfilmverdampfer, wie die unter den Bezeichnungen ®Sambay oder ®Luwa bekannten Geräte.

Die Acetanilid-Lösungen und die Salpetersäure werden in einer Mischstrecke vermischt und reagieren lassen. Die Mengen der Komponenten und die Kühlung werden dabei so aufeinander abgestimmt, daß eine Reaktionstemperatur von 30°C nicht überschritten wird. Es kann dabei zweckmäßig sein, einen Teil der bereits nitrierten Acetanilidlösung als Verdünnungsmittel im Kreis zu fahren.

0009794

Die Nitrierung der Acetanilide erfolgt praktisch momentan, so daß die abgezogene Reaktionslösung praktisch keine Ausgangsverbindung mehr enthält.

Die Nitroacetanilide können aus der Reaktionslösung z.B. durch Eingießen in Wasser und Abfiltrieren isoliert werden.

Nitroacetanilide sind Vorprodukte zur Herstellung von Farbstoffen; z.B. erhält man durch Reduktion der Nitrogruppe und anschließende Alkylierung der Aminogruppe wertvolle Kupplungskomponenten zur Herstellung von beispielsweise marineblauen Azofarbstoffen.

In den folgenden Beispielen beziehen sich Angaben über Teile und Prozente, sofern nicht anders vermerkt, auf das Gewicht.

Beispiel 1

Eine Lösung von 25 Teilen Acet-p-anisidin in 75 Teilen 96-98 %iger Schwefelsäure und 18,9 Teile 53 %ige Salpetersäure werden getrennt dem Sambay zugeführt. Die beiden Zuläufe werden im Sambay mit Hilfe von rückgeführter Produktlösung im Verhältnis 1:20 verdünnt (zwecks Vermeidung lokaler Überhitzung). Der Sambay-Ablauf mit maximal $30^{\circ}C$ wird in einem bei $+5^{\circ}C$ betriebenen Kristallisator mit 200 Teilen Wasser verdünnt (Teile Wasser/Teile Reaktionslösung = 1,5/1 bis 2/1). Nach der Trennung des auskristallisierten 2-Nitro-acet-p-anisidins von der schwefelsauren Lösung und der anschließenden Trocknung erhält man 28,6 Teile (90 % d.Th.) der nitrierten Verbindung.

0009794

Beispiel 2

In einem Mischkreis bestehend aus Umwäzpumpe und Plattenwärmetauscher wird die zugepumpte Lösung aus 25 Teilen Acet-p-anisidin und 75 Teilen 96-98 %iger Schwefelsäure mit der im Mischkreis schon umlaufenden Menge im Verhältnis 1:10 bis 1:20 verdünnt. Gleichzeitig werden 15,4 Teile 65 %ige Salpetersäure in den Mischkreis eindosiert. Die aus dem Mischkreis auslaufende Reaktionslösung wird analog Beispiel 1 aufgearbeitet. Man erhält so ebenfalls 28,6 Teile 2-Nitro-acet-p-anisidin.

Beispiel 3

In einem Mischkreis, bestehend aus Umwälzpumpe und Plattenwärmetauscher wird die zugepumpte Lösung aus 20 Teilen Acetanilid und 80 Teilen 96 %iger Schwefelsäure mit der im Mischkreis umlaufenden Menge im Verhältnis 1:10 verdünnt. Gleichzeitig werden 15 Teile 65 %ige Salpetersäure in den Mischkreis eindosiert. Die aus dem Mischkreis überlaufende Reaktionslösung mit maximal 30° wird in einem bei +5°C betriebenen Rührkessel mit 100 Teilen Wasser versetzt. Nach der Abtrennung des auskristallisierten 4-Nitro-acetanilids und der Trocknung erhält man 26,7 Teile des Produktes. Alternativ kann man auch die aus dem Mischkreis überlaufende Reaktionslösung mit maximal 30°C einem bei 100°C betriebenen Rührkessel führen und dort mit 50 Teilen Wasser verdünnen. Dabei wird das 4-Nitroacetanilid vollständig zu 4-Nitroanilin verseift.

0009794

Patentansprüche

1. Verfahren zur Nitrierung von Acetaniliden mit konzentrierter Salpetersäure, dadurch gekennzeichnet, daß man die Acetanilide in konzentrierter $H_2SO_4$ löst und die Lösung in einem Reaktor mit guter Wärmeabführung mit bis zu 65 %iger Salpetersäure so vereinigt, daß die Reaktionstemperatur ungefähr 30°C nicht überschreitet.

2. Verfahren gemäß Anspruch 1, dadurch gekennzeichnet, daß man 50- bis 65 %ige Salpetersäure verwendet.

3. Verfahren gemäß Anspruch 1, dadurch gekennzeichnet, daß man als Schwefelsäure 96 %ige Säure verwendet.

4. Verfahren gemäß Anspruch 1, dadurch gekennzeichnet, daß man Acet-p-anisidin nitriert.

**Europäisches Patentamt**

## EUROPÄISCHER RECHERCHENBERICHT

| EINSCHLÄGIGE DOKUMENTE | | | KLASSIFIKATION DER ANMELDUNG (Int.Cl. 3) |
|---|---|---|---|
| Kategorie | Kennzeichnung des Dokuments mit Angabe, soweit erforderlich, der maßgeblichen Teile | betrifft Anspruch | |
| X | <u>DE - A - 2 448 132</u> (BAYER AG) <br><br> * Seite 2, Zeilen 18-27; Beispiele 1,2 * <br><br>-- | 1-4 | C 07 C 102/00 <br> 103/375 <br> 103/38 <br> C 07 B 11/00 |
| X | INDUSTRIAL AND ENGINEERING CHEMISTRY, Vol. 29, Nr. 12, Dezember 1937, Washington, D.C., USA, H. McCORMACK: "Nitration", Seiten 1333-1335 <br><br> * Seite 1335 * <br><br>-- | 1-3 | |
| X | <u>US - A - 2 406 578</u> (E.H. BART) <br><br> * Beispiel * <br><br>-- | 1-3 | RECHERCHIERTE SACHGEBIETE (Int. Cl. 3) <br><br> C 07 C 103/00 <br> C 07 B 11/00 |
| E | <u>DE - A - 2 724 362</u> (BASF AG) <br><br> * Seite 24; Beispiel * <br><br>-- | 1-3 | |
| E | <u>DE - A - 2 723 247</u> (HOECHST AG) <br><br> * Ansprüche; Beispiel * <br><br>-- | 1-3 | |
| | <u>DE - A - 2 226 236</u> (BOEHRINGER MANNHEIM) <br><br> * Seite 1, Zeilen 20-25; Seiten 2,3 * <br><br>---- | 1-3 | |

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Grunden angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 03-01-1980 | PAUWELS |

EPA form 1503.1 06.78